Europäisches Patentamt

European Patent Office

Office européen des brevets

(19)

(11) **EP 0 703 410 B1**

(12) **FASCICULE DE BREVET EUROPEEN**

(45) Date de publication et mention
de la délivrance du brevet:
**15.12.1999 Bulletin 1999/50**

(51) Int Cl.6: **F23D 14/22**, F23M 5/02,
F23D 14/32

(21) Numéro de dépôt: **95401932.9**

(22) Date de dépôt: **23.08.1995**

(54) **Ensemble d'oxybrûleur comportant un ouvreau et procédé de mise en oeuvre d'un tel ensemble**

Brenner mit einem Brennerstein und Verfahren zu dessen Verwendung

Oxy-fuel burner comprising a block and method for operating the same

(84) Etats contractants désignés:
**BE DE ES GB IT NL SE**

(30) Priorité: **22.09.1994 FR 9411332**

(43) Date de publication de la demande:
**27.03.1996 Bulletin 1996/13**

(73) Titulaire: **L'AIR LIQUIDE, SOCIETE ANONYME POUR**
**L'ETUDE ET L'EXPLOITATION DES PROCEDES GEORGES CLAUDE**
**75321 Paris Cédex 07 (FR)**

(72) Inventeurs:
• **Duboudin, Thierry**
**F-75015 Paris (FR)**
• **Philippe, Louis**
**Oakbrook Terrace, IL 60181 (US)**
• **Laurenceau, Serge**
**F-78000 Versailles (FR)**
• **Duchateau, Eric**
**Clarendon Hills, IL 60514 (US)**
• **Iatrides, Jean-Yves**
**F-94100 Saint Maur des Fosses (FR)**

(74) Mandataire: **Vesin, Jacques et al**
**L'AIR LIQUIDE, S.A.,**
**Service Propriété Industrielle,**
**75, Quai d'Orsay**
**75321 Paris Cédex 07 (FR)**

(56) Documents cités:
**EP-A- 0 125 184**     **EP-A- 0 563 792**
**US-A- 3 748 087**     **US-A- 3 905 751**
**US-A- 4 120 639**     **US-A- 5 092 760**
**US-A- 5 178 921**

# Description

La présente invention concerne les oxybrûleurs utilisés dans des fours de production à haute température, notamment les fours de verre, et plus particulièrement un ensemble de combustion constitué d'un ouvreau et d'un oxybrûleur non refroidi du type comprenant un bloc en matériau réfractaire formé avec un passage traversant.

Les ouvreaux pour oxybrûleurs non refroidis comportent le plus souvent un passage cylindrique droit, comme décrit dans le document US-A-5.267.850 ou comportant une zone de sortie évasée, comme décrit dans le document US-A-5.092.760. Dans le premier cas, la combustion s'amorçant dans le passage, la vitesse des gaz sortant du passage, et entrant dans le four, est très élevée, même dans le cas où les vitesses d'éjection du carburant et du comburant oxygéné sont faibles, ce qui ne convient pas à de nombreuses utilisations, en particulier dans les fours de verre. Dans le deuxième cas, les vitesses d'éjection doivent être relativement importantes pour refroidir le passage de l'ouvreau et éviter le retour de gaz de combustion du four dans ce dernier, ce qui se traduit également par des vitesses de sortie excessives.

Le document US-A-3.748.087 décrit un ensemble d'un aérobrûleur et d'un ouvreau comportant un passage ayant une zone de sortie courte et très large et une zone d'entrée longue et de faible diamètre pour y réaliser un mélange intime du carburant et de l'air comburant à haute vitesse et permettre une pré-combustion dans la zone de sortie.

Le document US-A-4 120 639 décrit un ensemble d'un aérobrûleur et d'un ouvreau comportant un passage ayant une zone de sortie cylindrique et une zone d'entrée cylindrique séparées par une chambre de stabilisation. Les changements de diamètre entre la chambre de stabilisation et les zones d'entrée et de sortie sont abrupts pour faciliter la recirculation de gaz chauds.

La présente invention a pour objet de proposer un ensemble de combustion constitué d'un oxybrûleur et d'un ouvreau permettant de réduire les vitesses d'éjection du carburant et du comburant oxygéné, donc de diminuer la turbulence et de retarder le mélange entre ces composants, permettant ainsi d'éviter la formation de pointes de température élevées dans l'ouvreau, génératrices d'oxydes nitreux, d'augmenter la luminosité de la flamme pour former un transfert radiatif amélioré avec une vitesse de gaz en sortie d'ouvreau maintenue à un niveau relativement faible.

L'ensemble de combustion selon l'invention est conforme à la revendication 1

Selon d'autres caractéristiques de l'invention:

- le rapport $D_s/D_e$ n'excède par 2;
- le rapport $L_s/(D_s-D_e)$ est compris entre environ 2 et 7, typiquement entre 4 et 6;

- la zone de sortie comporte une portion amont conique de raccordement à la zone d'entrée, ayant typiquement un angle d'évasement inférieur à 45° et une longueur l n'excédant pas environ 15% de la longueur $L_s$ de la zone de sortie.

La présente invention a également pour objet un four, en particulier un four de verre, équipé d'un tel ensemble.

Selon une autre caractéristique de l'invention, la canalisation interne de carburant débouche à l'extrémité aval de la zone d'entrée, à son raccordement avec la zone de sortie.

La présente invention concerne également un procédé de mise en oeuvre d'un tel ensemble d'oxybrûleur et d'ouvreau dans lequel le comburant oxygéné est éjecté à une vitesse non inférieure à 5 mètres/seconde (m/s) et avantageusement inférieure à 60 m/s, le carburant étant éjecté à une vitesse supérieure à la vitesse d'éjection du comburant oxygéné.

D'autres caractéristiques et avantages de la présente invention ressortiront de la description suivante de modes de réalisation donnés à titre illustratif mais nullement limitatif, faite en relation avec les dessins annexés sur lesquels:

- la figure 1 est une vue schématique d'un premier mode de réalisation d'un ensemble oxybrûleur et ouvreau selon l'invention;
- la figure 2 est une courbe montrant le profil des vitesses de gaz en sortie d'ouvreau d' ensembles selon la figure 1; et
- la figure 3 est une vue schématique, analogue à la figure 1, d'un deuxième mode de réalisation d'un ensemble oxybrûleur et ouvreau selon l'invention.

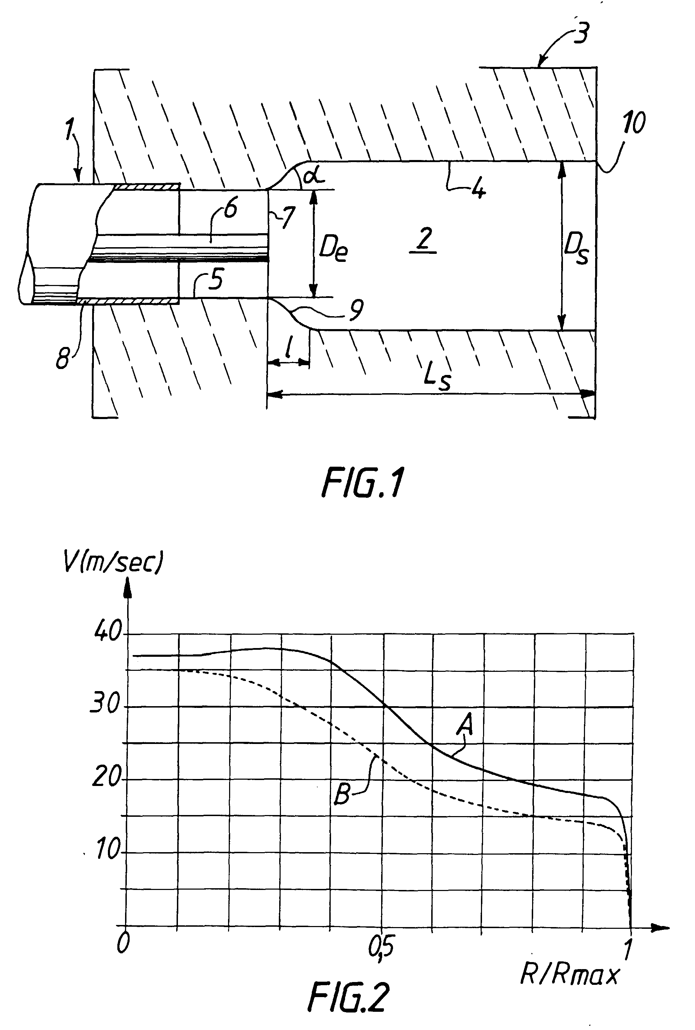

Sur la figure 1, on reconnaît l'extrémité aval d'un oxybrûleur 1 s'étendant partiellement dans un passage traversant 2 d'un ouvreau 3 réalisé en matériau réfractaire et destiné à être monté dans la paroi d'un four (non représenté), notamment un four de verre.

Selon l'invention, le passage 2 de l'ouvreau 3 comporte une zone de sortie sensiblement cylindrique 4 de diamètre intérieur $D_s$ et de longueur axiale $L_s$ se raccordant à une zone d'entrée coaxiale sensiblement cylindrique 5 de diamètre intérieur $D_e$. Dans le mode de réalisation représenté, l'oxybrûleur 1 comporte au moins une canalisation centrale 6 d'éjection de carburant gazeux ou liquide atomisé, coaxiale à la zone d'entrée 5 et dont l'extrémité avant ou débouché est sensiblement coplanaire avec le plan 7 de sortie de la zone d'entrée 5. L'oxybrûleur 1 comporte au moins une conduite périphérique 8 d'éjection de gaz comburant oxygéné ayant une teneur en oxygène d'au moins 85 % emmanchée dans l'extrémité amont de la zone d'entrée 5 et se terminant dans cette dernière, à distance, en arrière, de l'extrémité 7 de la canalisation de carburant 6. Avantageusement, la zone de sortie 4 comporte une partie amont 9, typiquement tronconique de demi-angle $\alpha$ et de longueur $\ell$ se raccordant, avantageusement continûment, sans arête vive, à l'extrémité aval de la zone d'entrée 5 et à la partie principale de la zone de sortie 4.

Selon un aspect de l'invention, le rapport des diamètres $D_s/D_e$ est compris entre environ 1,5 et 2,5, avantageusement inférieur à environ 2 et le rapport $L_s/(D_s-D_e)$ de la longueur de la zone de sortie, à la différence des diamètres entre les zones de sortie et d'entrée compris entre environ 2 et 7, typiquement entre environ 4 et 6. Dans le mode de réalisation avantageux représenté, l'angle $\alpha$ de la zone de raccordement 9 n'excède pas 45° et la longueur $\ell$ n'excède pas 15 % de la zone $L_s$ de la zone de sortie 4.

Pour garantir un refroidissement suffisant de l'ensemble oxybrûleur/ouvreau, la vitesse de sortie du gaz comburant oxygéné dans la zone d'entrée 5 est supérieure à 5 m/s et n'excède avantageusement pas environ 60 m/s. Corrélativement, la vitesse d'éjection du carburant à l'extrémité 7 de la canalisation 6 est comprise entre 1 et environ 6 fois la vitesse d'éjection du gaz comburant oxygéné, typiquement entre 1,5 et 3 fois cette dernière.

On a représenté sur la figure 2 le profil des vitesses axiales des gaz de combustion dans le plan de la sortie 10 de la zone de sortie 4, les ordonnées étant la vitesse axiale en mètres/seconde et les abscisses, la localisation d'un point dans le plan de sortie déterminée par le rapport entre son rayon par rapport à l'axe et le rayon maximal (égal à $D_s/2$), avec une vitesse d'éjection de gaz naturel de 30 m/s et une vitesse d'éjection d'oxygène impur de 15 m/s, et avec les deux géométries d'ouvreau A et B selon le tableau ci-dessous :

|   | $D_e$ | $D_s$ | $L_s$ | $D_s/D_e$ | $L/(D_s-D_e)$ |
|---|-------|-------|-------|-----------|---------------|
| A | 35 | 52 | 120 | 1,5 | 7 |
| B | 35 | 60 | 120 | 1,7 | 4,8 |

Comme on le voit sur la figure 2, la vitesse axiale des gaz de combustion en sortie de l'ouvreau n'excède en aucun endroit 40 m/s mais reste supérieur à 10 m/s jusqu'au voisinage immédiat de la couche limite le long des parois de la zone de sortie 4.

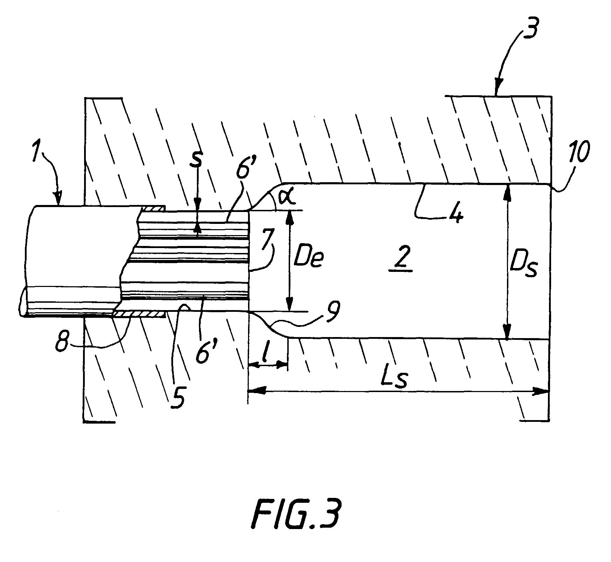

La figure 3 représente un mode de réalisation d'un ensemble d'oxybrûleur selon l'invention comprenant au moins deux, typiquement au moins trois, canalisations 6' d'éjection de carburant dont les débouchés sont tous coplanaires, typiquement dans le plan 7 de sortie de la zone d'entrée 5. Typiquement, l'oxybrûleur comporte cinq (comme représenté) ou sept conduites 6' angulairement réparties autour de l'axe de la zone d'entrée 5. Les injecteurs multi-tubes ont peu été développés industriellement en raison des risques de surchauffe locale du bloc-ouvreau dans la zone des régénératrices adjacentes aux conduites d'injection du fait du rapprochement de ces dernières de la paroi de l'ouvreau par rapport à la version avec conduite centrale. La configuration cylindrique étagée de l'ouvreau selon l'invention permet de réduire considérablement ces risques. Pour les supprimer sensiblement, selon un aspect de l'invention, la distance $\underline{s}$ minimale entre une conduite interne 6' et la paroi adjacente de la zone d'entrée 5 de l'ouvreau est déterminée en fonction des dimensions de la zone de sortie 4 de l'ouvreau pour respecter la relation suivante :

$$L_s/(s + (D_s-D_2)/2)$$

comprise entre environ 6 et 8.

Cette relation exprime le fait que le combustible éjecté par une canne 6', avec un cône d'éjection théorique de demi-angle d'ouverture d'environ 6°, ne vient pas frapper la paroi interne de la zone de sortie 4 mais vient virtuellement frapper le prolongement de cette dernière en un point situé à une distance optimisée de l'extrémité 10 de l'ouvreau.

Quoique la présente invention ait été décrite en relation avec des modes de réalisation particuliers, elle ne s'en trouve pas limitée mais est au contraire susceptible de modifications et de variantes qui apparaîtront à l'homme de l'art, dans le cadre des revendications ci-après.

**Revendications**

1. Ensemble de combustion constitué d'un oxybrûleur et d'un ouvreau comprenant un bloc en matériau réfractaire (3) formé avec un passage (2) traversant, l'oxybrûleur comprenant au moins une canalisation interne (6,6') d'éjection de carburant et au moins une canalisation périphérique (8) d'éjection de comburant oxygéné débouchant dans la zone d'entrée (5), caractérisé en ce que le passage (2) comprenant une zone de sortie (4) sensiblement cylindrique de diamètre $D_s$ et longueur $L_s$, se raccordant continument à une zone d'entrée (5) sensiblement cylindrique de diamètre De, le rapport $D_s/D_e$ étant compris entre 1,5 et 2,5 et le rapport $L_s/(D_s-D_e)$ étant compris entre 2 et 7.

2. Ensemble selon la revendication 1, caractérisé en ce que le rapport $D_s/D_e$ n'excède pas 2.

3. Ensemble selon la revendication 1 ou la revendication 2, caractérisé en ce que le rapport $Ls/(D_s-D_e)$ est compris entre 4 et 6.

4. Ensemble selon l'une des revendications précédentes, caractérisé en ce que la zone de sortie (4) comporte une partie amont tronconique (9) se raccordant à la zone d'entrée (5).

5. Ensemble selon la revendication 4, caractérisé en ce que la partie tronconique (9) a un demi-angle d'ouverture ∝ n'excédant pas 45°.

6. Ensemble selon la revendication 5, caractérisé en ce que la longueur l de la partie tronconique (9) n'excède pas 15% de la longueur $L_s$ de la section de sortie (4).

7. Ensemble selon l'une des revendication 1 à 6, caractérisé en ce que la canalisation interne de carburant (6, 6') débouche (en 7) sensiblement à l'extrémité aval de la zone d'entrée (5).

8. Ensemble selon l'une des revendications 1 à 7, caractérisé en ce qu'il comprend au moins deux canalisations internes (6'), chacune écartée de la paroi de la zone interne d'une distance ($\underline{s}$) telle que :

$$L_s/(s + (D_s\text{-}D_e\text{/})2)$$

est comprise entre 6 et 8.

9. Procédé de mise en oeuvre d'un ensemble selon l'une des revendications précédentes, caractérisé en ce qu'on éjecte un gaz comburant comprenant au moins 85% d'oxygène à une vitesse supérieure à 5m/s et en ce qu'on éjecte un gaz carburant à une vitesse au moins égale à celle du gaz comburant.

10. Procédé selon la revendication 9, caractérisé en ce qu'on éjecte le carburant à une vitesse n'excédant pas 6 fois la vitesse du gaz comburant.

11. Four et notamment four de verre équipé d'un ensemble selon l'une des revendications 1 à 8.

**Patentansprüche**

1. Brennaggregat, bestehend aus einem Gasbrenner und einem Brennermaul, das einen Brennerformstein aus feuerfestem Material (3) mit einer durchgehenden Öffnung (2) umfaßt, wobei der Gasbrenner mindestens ein Innenrohr (6, 6') für die Zuführung von Brennstoff und mindestens ein peripheres Rohr (8) für die Zuführung der Verbrennungsluft, das in die Eintrittszone (5) mündet, umfaßt, dadurch gekennzeichnet, daß die Öffnung (2) eine im wesentlichen zylindrische Austrittszone (4) mit dem Durchmesser $D_s$ und der Länge $L_s$ umfaßt, die kontinuierlich in eine im wesentlichen zylindrische Eintrittszone (5) mit dem Durchmesser $D_e$ übergeht, wobei das Verhältnis $D_s/D_e$ zwischen 1,5 und 2,5 und das Verhältnis $L_s/(D_s\text{-}D_e)$ zwischen 2 und 7 liegt.

2. Aggregat nach Anspruch 1, dadurch gekennzeichnet, daß das Verhältnis $D_s/D_e$ den Wert 2 nicht übersteigt.

3. Aggregat nach Anspruch 1 oder Anspruch 2, dadurch gekennzeichnet, daß das Verhältnis $L_s/(D_s\text{-}D_e)$ zwischen 4 und 6 liegt.

4. Aggregat nach einem der vorhergehenden Ansprüche, dadurch gekennzeichnet, daß die Austrittszone (4) einen vorderen kegelstumpfförmigen Abschnitt (9) umfaßt, der an die Eintrittszone (5) anschließt.

5. Aggregat nach Anspruch 4, dadurch gekennzeichnet, daß der kegelstumpfförmige Abschnitt (9) einen Öffnungshalbwinkel a aufweist, der 45° nicht übersteigt.

6. Aggregat nach Anspruch 5, dadurch gekennzeichnet, daß die Länge l des kegelstumpfförmigen Abschnitts (9) 15% der Länge $L_s$ des Austrittsabschnitts (4) nicht übersteigt.

7. Aggregat nach einem der Ansprüche 1 bis 6, dadurch gekennzeichnet, daß das Innenrohr (6, 6') für den Brennstoff genau (in 7) in das hintere Ende der Eintrittszone (5) mündet.

8. Aggregat nach einem der Ansprüche 1 bis 7, dadurch gekennzeichnet, daß es mindestens zwei Innenrohre (6') umfaßt, die jeweils um den Abstand ($\underline{s}$) von der Wandung des Innenraums entfernt sind, so daß

$$L_s/(s + (D_s\text{-}D_e\text{/})2)$$

zwischen 6 und 8 liegt.

9. Verfahren zur Ausführung eines Aggregats nach einem der vorhergehenden Ansprüche, dadurch gekennzeichnet, daß man ein mindestens 85% Sauerstoff enthaltendes Verbrennungsgas mit einer Geschwindigkeit von über 5 m/s und ein Brenngas mit einer Geschwindigkeit, die der des Verbrennungsgases mindestens gleich ist, zuführt.

10. Verfahren nach Anspruch 9, dadurch gekennzeichnet, daß man den Brennstoff mit einer Geschwindigkeit zuführt, die das Sechsfache der Geschwindigkeit des Verbrennungsgases nicht übersteigt.

11. Ofen, insbesondere Glasofen, der mit einem Aggregat nach einem der Ansprüche 1 bis 8 ausgestattet ist.

## Claims

1. Combustion assembly consisting of an oxy-fuel burner and of an opening comprising a block of refractory material (3) formed with a through-passage (2), the oxy-fuel burner comprising at least one internal passage (6, 6') for ejection of fuel and at least one peripheral passage (8) for ejection of oxygenated oxidizing agent opening into the inlet region (5), characterized in that the passage (2) comprising a substantially cylindrical outlet region (4) of diameter $D_s$ and length $L_s$, connecting continuously to a substantially cylindrical inlet region (5) of diameter $D_e$, the ratio $D_s/D_e$ is between 1.5 and 2.5 and the ratio $L_s/(D_s-D_e)$ is between 2 and 7.

2. Assembly according to Claim 1, characterized in that the ratio $D_s/D_e$ does not exceed 2.

3. Assembly according to Claim 1 or Claim 2, characterized in that the ratio $L_s(D_s-D_e)$ is between 4 and 6.

4. Assembly according to one of the preceding claims, characterized in that the outlet region (4) comprises a truncated-conical upstream portion (9) connecting to the inlet region (5).

5. Assembly according to Claim 4, characterized in that the truncated-conical portion (9) has a half angle $\alpha$ which does not exceed 45°.

6. Assembly according to Claim 5, characterized in that the length 1 of the truncated-conical portion (9) does not exceed 15% of the length $L_s$ of the outlet section (4).

7. Assembly according to one of Claims 1 to 6, characterized in that the internal fuel passage (6, 6') opens out (at 7) substantially at the downstream end of the inlet region (5).

8. Assembly according to one of Claims 1 to 7, characterized in that it comprises at least two internal passages (6'), each spaced from the wall of the internal region by a distance (s) such that:

$$L_s/(s+(D_s-D_e)/2)$$

is between 6 and 8.

9. Process for operating an assembly according to one of the preceding claims, characterized in that an oxidizing gas containing at least 85% oxygen is ejected at a speed greater than 5 m/s and in that a fuel gas is ejected at a speed at least equal to that of the oxidizing gas.

10. Process according to Claim 9, characterized in that the fuel is ejected at a speed that does not exceed 6 times the speed of the oxidizing gas.

11. Furnace, particularly glass furnace, equipped with an assembly according to one of Claims 1 to 8.

FIG.1

FIG.2

# FIG.3